# EUROPÄISCHE PATENTSCHRIFT

(11) **EP 3 878 688 B1**
(45) Veröffentlichungstag und Bekanntmachung des Hinweises auf die Patenterteilung: **16.08.2023**
(21) Anmeldenummer: 21161271.8
(22) Anmeldetag: 08.03.2021
(51) Int. Cl.: B60P 1/43

(54) **VORRICHTUNG MIT ZWEI SCHARNIEREN**
DEVICE WITH TWO HINGES
DISPOSITIF DOTÉ DE DEUX CHARNIÈRES

(30) Priorität: 09.03.2020 DE 202020101283 U
(43) Veröffentlichungstag der Anmeldung: 15.09.2021
(73) Patentinhaber: Krupp, Peter, 26160 Bad Zwischenahn (DE)
(72) Erfinder: Krupp, Peter, 26160 Bad Zwischenahn (DE)
(74) Vertreter: Jabbusch, Matthias

(56) Entgegenhaltungen:
- CH-A- 350 216
- DE-U1- 29 803 711
- FR-A1- 2 941 000
- US-A1- 2013 192 008

## Beschreibung

Die Erfindung betrifft eine Vorrichtung zur Verbindung einer Ladebordwand eines Nutzfahrzeugs oder eines Kraftfahrzeuganhängers mit einem Anschlagabschnitt einer Ladefläche des Nutzfahrzeugs oder des Kraftfahrzeuganhängers, wobei die Ladebordwand über wenigstens zwei Scharniere schwenkbeweglich und lösbar an dem Anschlagabschnitt angelenkt ist, wobei die Scharniere eine gemeinsame Drehachse aufweisen und jeweils aus einem Zapfen und einer auf den Zapfen aufsteckbaren Buchse gebildet sind, wobei ein entlang der Drehachse angeordnetes Scharnier einen längeren Zapfen als ein nächstes Scharnier aufweist und wobei der längere Zapfen einen zylindrischen Abschnitt mit in radialer Erstreckung zu der Drehachse gleichmäßigem Durchmesser aufweist.

Für übergroße Ladungen oder zum Entladen der Nutzfahrzeuge oder Kraftfahrzeuganhänger sind entsprechende Ladebordwände zumeist abnehmbar an dem Nutzfahrzeug oder an dem Kraftfahrzeuganhänger befestigt. Um abgenommene Ladebordwände anschließend wieder einzuhängen, werden zumeist mehrere Personen, zumindest aber zwei Personen, an den jeweiligen Enden der Ladebordwand benötigt, um Zapfen und Buchsen der fluchtend zueinander angeordneten Scharniere aufeinander zu schieben. Die größte Herausforderung besteht dabei darin, dass die Zapfen und Buchsen aller Scharniere gleichzeitig zusammengeführt werden müssen. Fehlt eine helfende Person, sind die Zapfen und Buchsen der Scharniere von einer Person auch aufgrund der Abmessungen und des Gewichts von Ladebordwänden kaum zusammenzuführen.

Die US 2013/192008 A1 offenbart ein Verfahren, wie eine Ladeklappe eines Anhängers von einer Einzelperson an diesem befestigt werden kann. Hierzu weist entweder der Anhänger oder die Ladeklappe zwei Dorne auf, an denen Hülsen des jeweils anderen Teils befestigbar sind. Die Hülsen sollen sich jeweils aus einem zylindrischen Abschnitt und einem halbzylindrischen Abschnitt zusammensetzen.

Gemäß der DE 298 03 711 U1 wird ein Gelenksystem zum gelenkigen und trennbaren Verbinden zweier Teile aufgezeigt, wobei Gelenkelemente der Teile durch eine Translationsbewegung der Teile in Achsenrichtung ab einem Kopplungspunkt voneinander gelöst bzw. miteinander gekoppelt werden.

Aufgabe der Erfindung ist es daher, eine entsprechend lösbare Scharnierverbindung dahingehend weiterzuentwickeln, dass diese von einer einzelnen Person zusammengeführt werden kann und eine besonders stabile Führung bei Drehbewegung der miteinander gekoppelten Teile sicherstellt. Die Lösung dieser Aufgabe erfolgt mit den Merkmalen des Anspruchs 1. Weiterbildungen und vorteilhafte Ausgestaltungen sind in den jeweils nachgeordneten Ansprüchen angegeben.

Die Vorrichtung zur Verbindung einer Ladebordwand eines Nutzfahrzeugs oder eines Kraftfahrzeuganhängers mit einem Anschlagabschnitt einer Ladefläche des Nutzfahrzeugs oder des Kraftfahrzeuganhängers, wobei die Ladebordwand über wenigstens zwei Scharniere schwenkbeweglich und lösbar an dem Anschlagabschnitt angelenkt ist, wobei die Scharniere eine gemeinsame Drehachse aufweisen und jeweils aus einem Zapfen und einer auf den Zapfen aufsteckbaren Buchse gebildet sind, wobei ein entlang der Drehachse angeordnetes Scharnier einen längeren Zapfen als ein nächstes Scharnier aufweist und wobei der längere Zapfen einen zylindrischen Abschnitt mit in radialer Erstreckung zu der Drehachse gleichmäßigem Durchmesser aufweist, zeichnet sich erfindungsgemäß dadurch aus, dass der zylindrische Abschnitt des Zapfens eine Länge entsprechend wenigstens der Länge der Buchse aufweist.

Mit den unterschiedlich langen Zapfen der Scharniere ist auf einfache Weise erreicht, dass die an den Scharnieren einzuhängende Ladebordwand zunächst nur auf den längeren Zapfen eines ersten Scharniers teilweise aufgeschoben werden kann beziehungsweise mit dem längeren Zapfen in eine diesem zugeordnete Buchse teilweise eingeführt wird. Zapfen und Buchse werden dabei nur soweit zusammengeschoben, wie der längere Zapfen gegenüber dem anderen Zapfen länger ist. Anschließend kann die Ladebordwand auf dem längeren Zapfen oder in der Buchse des ersten Scharniers aufliegend zu einem nächsten Zapfen oder einer nächsten Buchse eines benachbarten, zweiten Scharniers ausgerichtet werden. Die Ausrichtung zu den Scharnieren erfolgt demnach nacheinander. Die so auch von einer Person zu den Scharnieren ausrichtbare Ladebordwand wird dann gleichzeitig auf die Zapfen der wenigstens beiden Scharniere aufgeschoben oder gleichzeitig in die Buchsen der wenigstens beiden Scharniere eingeführt. Eine weitere Person ist somit nicht mehr erforderlich, um die Ladebordwand zu den Zapfen der Scharniere auszurichten, da jeweils nur ein Ende der Ladebordwand zu einem der Scharniere ausgerichtet werden muss.

Um die Buchse und den längeren Zapfen des wenigstens einen Scharniers auf einfache Weise zusammenführen zu können, ist nach einer Weiterbildung vorgesehen, dass der Zapfen des Scharniers mit dem längeren Zapfen sich zumindest abschnittsweise zu seinem freien Ende hin verjüngt. Der zu seinem freien Ende hin angespitzt zulaufende Zapfen erlaubt eine größere Toleranz hinsichtlich der Ausrichtung der Ladebordwand und des Anschlagabschnitts zueinander. Zapfen und Buchse können dann auch zusammengeführt werden, wenn diese nicht genau konzentrisch zueinander fluchtend ausgerichtet sind.

Gemäß einer vorteilhaften Ausgestaltung ist der längere Zapfen dabei zumindest abschnittsweise konisch zulaufend ausgebildet. Das verjüngte, freie Ende des Zapfens ist damit vorteilhafterweise konzentrisch zum restlichen Umfang des Zapfens und der Drehachse der Scharniere ausgerichtet, insbesondere konzentrisch zu einem nicht verjüngten Abschnitt des Zapfens ausgerichtet. Buchse und Zapfen des Scharniers können damit beim Zusammenführen dieser radial zu einer Drehachse des Scharniers in alle Richtungen gleich weit abweichen.

Damit die an den Scharnieren eingehängte Ladebordwand in vorbestimmter Weise um die gemeinsame Drehachse der Scharniere verschwenkt werden kann ohne zu verklemmen oder zu wackeln, weist der längere Zapfen gemäß einer Weiterbildung wenigstens einen zylindrischen Abschnitt mit in radialer Erstreckung zu der Drehachse gleichmäßigem Durchmesser auf. Der zylindrische Abschnitt mit in radialer Erstreckung zu der Drehachse gleichmäßigem Durchmesser liegt dann mit seiner Mantelfläche zumindest abschnittsweise an einer Innenwandung der Buchse an, die einen geringfügig größeren Innendurchmesser aufweist, wodurch ein verwindungsfreies Verschwenken der Ladebordwand zu dem Anschlagabschnitt sichergestellt ist. Der mit der Buchse in Anlage zu bringende zylindrische Abschnitt des Zapfens setzt entsprechend an dem dickeren Ende des sich verjüngenden Abschnitts an.

Indem der zylindrische Abschnitt des längeren Zapfens eine Länge entsprechend wenigstens der Länge der Buchse aufweist, weist die Buchse bei eingehängter Ladebordwand über deren gesamte Länge ein gleichbleibendes Spaltmaß zu dem Zapfen auf. In weiterer Ausgestaltung ist der zylindrische Abschnitt des längeren Zapfens länger ausgebildet als die Länge der Buchse, so dass der sich verjüngende Abschnitt bei vollständig aufgeschobener Buchse um das Maß, mit dem der zylindrische Abschnitt länger ist als die Buchse, zu der Buchse beabstandet ist.

Der kürzere Zapfen des anderen Scharniers ist oder die kürzeren Zapfen der anderen Scharniere sind vorteilhafterweise nur aus einem solchen zylindrischen Abschnitt gebildet. Dieser ist beziehungsweise diese sind zum einfachen Zusammenführen von Zapfen und Buchse gegebenenfalls endseitig angespitzt oder abgerundet.

Der sich verjüngende Teil des längeren Zapfens muss dabei nicht bis zum freien Ende des Zapfens reichen. Nach einer Weiterbildung kann ein sich in Richtung freies Ende verjüngender Abschnitt, insbesondere ein in Richtung freies Ende konisch zulaufender Abschnitt, auch mittig zwischen zwei zylindrischen Abschnitten mit jeweils gleichbleibendem Durchmesser angeordnet sein. Der sich in Richtung freies Ende des Zapfens an den sich verjüngenden Abschnitt, insbesondere den konischen Abschnitt, gegebenenfalls anschließende weitere zylindrische Abschnitt weist dann vorteilhafterweise einen maximalen Durchmesser auf, der dem Durchmesser des jüngeren Endes des sich verjüngten Abschnitts entspricht.

Besonders vorteilhaft ist eine Gestaltung des sich verjüngenden Teils des längeren Zapfens, bei dem dieser unterschiedlich stark abgewinkelte oder gekrümmte Flächen oder Bereiche aufweist. Eine bei bestimmungsgemäßer Anordnung obere Fläche oder ein bei bestimmungsgemäßer Anordnung oberer Bereich des sich verjüngenden Teils des längeren Zapfens ist dann in weiterer Ausgestaltung in einem stärkeren Winkel zu der Drehachse der Scharniere angestellt als eine untere Fläche beziehungsweise ein unterer Bereich des sich verjüngenden Teils des längeren Zapfens. Der sich verjüngende Teil des längeren Zapfens kann dann durch einen Kegelstumpfabschnitt gebildet sein, dessen Mittenachse in Richtung des sich verjüngenden Endes des Zapfens gegenüber einer Drehachse der Scharniere abgelenkt ist. Die Mittenachse ist dann in einem Winkel zu der Drehachse der Scharniere angestellt, die sich aus den Winkeln ergibt, mit denen die unteren und oberen Flächen oder Bereiche des sich verjüngenden Abschnitts gegenüber der Drehachse abweichen.

Gemäß einer alternativen oder ergänzenden Ausführung kann die Buchse an der Seite, an der der Zapfen in die Buchse eingeführt wird, eine Aufweitung aufweisen. Eine Aufweitung der Buchse führt dabei zu den gleichen Vorteilen wie ein sich in Richtung freies Ende verjüngender Zapfen. Entsprechend dem Zapfen weist dann auch die Buchse an einer Innenwandung wenigstens einen zylindrischen Abschnitt mit in radialer Erstreckung gleichbleibendem Durchmesser auf, wobei der Durchmesser geringfügig größer als der Durchmesser des zylindrischen Abschnitts des Zapfens ist, insbesondere geringfügig größer als der Durchmesser des Zapfens an seinem dicksten Abschnitt ist.

Da die Scharniere der Vorrichtung alle eine einzige, gemeinsame Drehachse aufweisen, ist es nach einer Weiterbildung auch bei mehr als zwei Scharnieren ausreichend, wenn jeweils nur ein Zapfen, insbesondere ein einziger Zapfen eines der Scharniere, länger ausgeführt ist als die Zapfen der anderen Scharniere. Zum Ausrichten der Ladebordwand ist es in jedem Fall und unabhängig von der Anzahl der Scharniere nur erforderlich, zwei dieser Scharniere zueinander auszurichten. Sind zwei von mehreren Scharnieren zwischen der Ladebordwand und dem Anschlagabschnitt fluchtend zueinander ausgerichtet, sind zwangsweise immer auch die restlichen Scharniere mit derselben Drehachse fluchtend ausgerichtet.

Ein Ausführungsbeispiel der Erfindung, aus dem sich weitere erfindungswesentliche Merkmale ergeben können, ist in der Zeichnung dargestellt. Gleiche Teile sind dabei in allen Figuren mit gleichen Bezugszeichen versehen. Es zeigen:
- Figur 1:: einen Querschnitt durch eine erste Ausführung einer erfindungsgemäßen Vorrichtung;
- Figur 2:: einen Querschnitt durch eine zweite Ausführung einer erfindungsgemäßen Vorrichtung;
- Figur 3:: einen Querschnitt durch eine dritte Ausführung eines erfindungsgemäßen Zapfens der Vorrichtung gemäß Figur 1 oder Figur 2; und
- Figur 4:: einen Querschnitt durch eine vierte Ausführung eines erfindungsgemäßen Zapfens der Vorrichtung gemäß Figur 1 oder Figur 2.

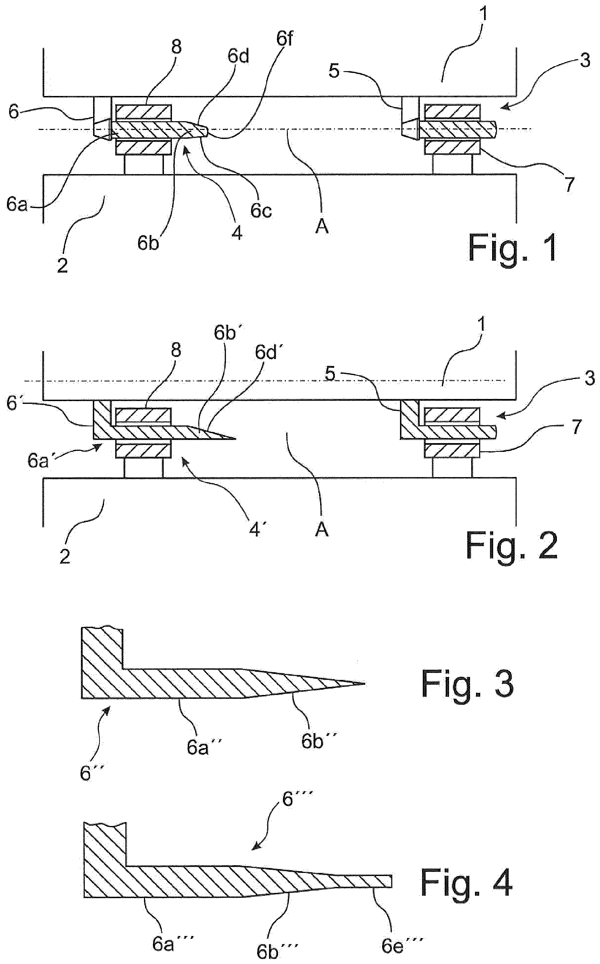

Der Querschnitt gemäß Figur 1 zeigt eine erste Ausführung der erfindungsgemäßen Vorrichtung umfassend einen Anschlagabschnitt 1 einer Ladefläche eines Nutzfahrzeugs oder Kraftfahrzeuganhängers und eine lösbar und schwenkbeweglich an dem Anschlagabschnitt 1 angelenkte Ladebordwand 2. Der Anschlagabschnitt 1 und die Ladebordwand 2 sind über eine Scharnierverbindung aus zwei Scharnieren 3, 4 miteinander verbunden, wobei die beiden Scharniere 3, 4 eine gemeinsame Drehachse A aufweisen. Die beiden Scharniere 3, 4 setzen sich jeweils aus einem an dem Anschlagabschnitt 1 angeordneten Zapfen 5, 6 und einer der Ladebordwand 2 zugeordneten Buchse 7, 8 zusammen. Der Zapfen 5 und die Buchse 7 bilden das Scharnier 3 und der Zapfen 6 und die Buchse 8 bilden das Scharnier 4. Die Buchsen 7, 8 sind zueinander identisch und jeweils auf die Zapfen 5, 6 aufgesteckt.

Die beiden Scharniere 3, 4 unterscheiden sich jeweils durch die Ausformung der Zapfen 5, 6. Der Zapfen 5 weist eine zylindrische Grundform mit durchgehend gleich bleibendem Durchmesser auf und weist in Richtung der Drehachse A eine größere Länge als die Länge der Buchse 7 auf. Mit seinem freien Ende ragt der Zapfen 5 damit aus der Buchse 7 hervor. Der Durchmesser des zylindrischen Zapfens 5 ist dabei so gestaltet, dass dieser passgenau in die Buchse 7 eingeführt werden kann. Der Zapfen 6 ist in Richtung der Drehachse A länger als der Zapfen 5. Die Buchsen 7, 8 sind zueinander identisch ausgebildet. Der Zapfen 6 weist ebenso wie der Zapfen 5 einen zylindrischen Abschnitt 6a gleicher Länge des zylindrischen Zapfens 5 auf, auf den die Buchse 8 passgenau aufgeschoben ist. In Richtung seines freien Endes weist der Zapfen 6 einen sich an den zylindrischen Abschnitt 6a anschließenden, sich verjüngenden Abschnitt 6b auf. Der sich verjüngende Abschnitt 6b formt einen Kegelstumpfabschnitt mit einer von der Drehachse A der Scharniere abweichenden Mittenachse, wobei ein bestimmungsgemäß oberer Bereich 6d des sich verjüngenden Abschnitts 6b in einem größeren Winkel zu der Drehachse A angestellt ist als ein unterer Bereich 6c des sich verjüngenden Abschnitts 6b. Um diesen sich verjüngenden Abschnitt 6b ist der Zapfen 6 länger als der Zapfen 5. Als Abschluss weist das freie Ende des sich verjüngenden Abschnitts 6b des Zapfens 6 eine gewölbte Fläche 6f auf.

Der hervorstehende Teil des längeren Zapfens 6, um den dieser länger ist als der Zapfen 5, dient dem Ausrichten der Ladebordwand 2 zu dem Anschlagabschnitt 1. Die Ladebordwand 2 wird dazu zunächst mit der Buchse 8 auf den sich verjüngenden Abschnitt 6b des Zapfens 6 aufgeschoben. Die Buchse 8 und der Zapfen 6 des Scharniers 4 sind damit noch nicht vollständig zusammengeschoben. Die mit der Buchse 8 auf dem sich verjüngenden Abschnitt 6b des Zapfens 6 aufliegende Ladebordwand 2 kann dann an dem zweiten Scharnier 3 so ausgerichtet werden, dass auch der Zapfen 5 und die Buchse 7 des Scharniers 3 fluchtend zueinander ausgerichtet sind. Eine die Ladebordwand 2 an dem Anschlagabschnitt 1 anbringende Person muss die Ladebordwand 2 somit zu einem beliebigen Zeitpunkt immer nur zu einem der Scharniere 3, 4 ausrichten. Ist auch das zweite Scharnier 3 so ausgerichtet, dass die Buchse 7 und der Zapfen 5 auf der Drehachse A der Scharniere 3, 4 angeordnet sind, können die Zapfen 5, 6 und die Buchsen 7, 8 der beiden Scharniere 3, 4 zeitgleich soweit wie möglich, das heißt vollständig, zusammengeschoben werden, bis diese in ihrer vorbestimmten Lage zueinander angeordnet sind.

In Figur 2 ist eine alternative Ausführung der Vorrichtung gezeigt, wobei der Zapfen 6' des Scharniers 4' einen gegenüber Figur 1 abgeänderten, sich verjüngenden Abschnitt 6b' aufweist. Dieser ist in Richtung des freien Endes des Zapfens 6' einseitig abgeflacht ausgeführt. Diese Abflachung 6d' des Zapfens 6' ist dabei in einer bestimmungsgemäßen Anordnung der Vorrichtung an einer oberen Seite des Zapfens 6' ausgebildet, während dessen untere Seite in Verlängerung des äußeren Umfangs des zylindrischen Abschnitts 6a' fortgeführt ist. Die untere Seite beziehungsweise ein unterer Bereich des Zapfens 6` weist damit keine Verjüngung auf.

Die Figuren 3 und 4 zeigen jeweils weitere gegenüber der Figur 1 und der Figur 2 abgeänderte Ausführungen des Zapfens 6 beziehungsweise des Zapfens 6`. In Figur 3 ist der Zapfen 6" dahingehend gegenüber dem Zapfen 6 und dem Zapfen 6' verändert, dass der sich verjüngende Abschnitt 6b" konisch in Richtung freies Ende des Zapfens 6" verjüngend ausgebildet ist. Der zylindrische Abschnitt 6a" entspricht den zylindrischen Abschnitten 6a und 6a`. Die Ausführung gemäß Figur 2 ermöglicht gegenüber der Ausführung gemäß Figur 1 beim Zusammenführen von Zapfen 6" und Buchse 8 ausgehend von der Drehachse A eine größere Toleranz in alle Richtungen.

Figur 3 zeigt eine weitere Ausführung mit einem Zapfen 6‴. In dieser Ausführung reicht der sich verjüngende Abschnitt 6b‴, der wie in Figur 2 als Konus ausgeführt ist, entgegen den Ausführungen in Figur 1 und in Figur 2 nicht mehr bis zum freien Ende des Zapfens 6‴. Der sich verjüngende Abschnitt 6b‴ ist vielmehr zwischen einem zylindrischen Abschnitt 6a‴ und einem weiteren zylindrischen Abschnitt 6e‴ angeordnet. Der dickere, zylindrische Abschnitt 6a‴ weist dabei einen Durchmesser gleich dem Durchmesser des breiteren Endes des Konus auf und der dünnere, zylindrische Abschnitt 6e‴ weist einen Durchmesser gleich dem Durchmesser des dünneren Endes des Konus auf.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nur auf die beanspruchten Merkmalskombinationen beschränkt.

## Patentansprüche

1. Vorrichtung zur Verbindung einer Ladebordwand (2) eines Nutzfahrzeugs oder eines Kraftfahrzeuganhängers mit einem Anschlagabschnitt (1) einer Ladefläche des Nutzfahrzeugs oder des Kraftfahrzeuganhängers, wobei die Ladebordwand (2) über wenigstens zwei Scharniere (3, 4, 4`) schwenkbeweglich und lösbar an dem Anschlagabschnitt (1) angelenkt ist, wobei die Scharniere (3, 4, 4') eine gemeinsame Drehachse (A) aufweisen und jeweils aus einem Zapfen (5, 6, 6', 6", 6‴) und einer auf den Zapfen (5, 6, 6', 6", 6‴) aufsteckbaren Buchse (7, 8) gebildet sind, **dadurch gekennzeichnet, dass** ein entlang der Drehachse (A) angeordnetes Scharnier (4, 4') einen längeren Zapfen (6, 6', 6", 6‴) als ein nächstes Scharnier (3) aufweist und wobei der längere Zapfen (6, 6', 6", 6‴) einen zylindrischen Abschnitt (6a, 6a', 6a", 6a‴) mit in radialer Erstreckung zu der Drehachse (A) gleichmäßigem Durchmesser aufweist, wobei der zylindrische Abschnitt (6a, 6a', 6a", 6a‴) des Zapfens (6, 6', 6", 6‴) eine Länge entsprechend wenigstens der Länge der Buchse (8) aufweist.

2. Vorrichtung nach Anspruch 1, **dadurch gekennzeichnet, dass** der längere Zapfen (6, 6', 6", 6‴) sich zumindest abschnittsweise zu seinem freien Ende hin verjüngt.

3. Vorrichtung nach einem der Ansprüche 1 oder 2, **dadurch gekennzeichnet, dass** der längere Zapfen (6, 6", 6‴) zumindest abschnittsweise konisch zulaufend ausgebildet ist.

4. Vorrichtung nach einem der Ansprüche 1 bis 3, **dadurch gekennzeichnet, dass** der zylindrische Abschnitt (6a, 6a', 6a", 6a‴)eine Länge größer der Länge der Buchse (8) aufweist.

5. Vorrichtung nach einem der Ansprüche 1 bis 4, **dadurch gekennzeichnet, dass** der sich verjüngende Teil des längeren Zapfens (6, 6') unterschiedlich stark abgewinkelte oder gekrümmte Flächen oder Bereiche (6d, 6d', 6c) aufweist.

6. Vorrichtung nach einem der Ansprüche 1 bis 5, **dadurch gekennzeichnet, dass** bei mehr als zwei Scharnieren (3, 4, 4') mit einer gemeinsamen Drehachse (A) nur ein Zapfen (6, 6', 6", 6‴) eines der Scharniere (4, 4') länger ausgeführt ist als die Zapfen (5) der anderen Scharniere (3).

## Claims

1. A device for connecting a tail lift (2) of a commercial vehicle or of a motor vehicle trailer to a stop section (1) of a loading area of the commercial vehicle or of the motor vehicle trailer, wherein the tail lift (2) is articulated pivotably and detachably via at least two hinges (3, 4, 4') on the stop section (1), wherein the hinges (3, 4, 4') have a shared rotation axis (A) and are formed respectively of a pin (5, 6, 6', 6", 6‴) and of a bush (7, 8) which is able to be mounted onto the pin (5, 6, 6', 6", 6‴), **characterized in that** a hinge (4, 4'), arranged along the rotation axis (A), has a longer pin (6, 6', 6", 6‴) than a next hinge (3), and wherein the longer pin (6, 6', 6", 6‴) has a cylindrical portion (6a, 6a', 6a", 6a''') with a uniform diameter in radial extent to the rotation axis (A), wherein the cylindrical portion (6a, 6a', 6a", 6a‴) of the pin (6, 6', 6", 6‴) has a length corresponding at least to the length of the bush (8).

2. The device according to Claim 1, **characterized in that** the longer pin (6, 6', 6", 6‴) narrows at least in part towards its free end.

3. The device according to one of Claims 1 or 2, **characterized in that** the longer pin (6, 6", 6''') is formed at least in part tapering conically.

4. The device according to one of Claims 1 to 3, **characterized in that** the cylindrical portion (6a, 6a', 6a", 6a‴) has a length greater than the length of the bush (8).

5. The device according to one of Claims 1 to 4, **characterized in that** the narrowing portion of the longer pin (6, 6') has areas or regions (6d, 6d', 6c) which are angled or curved to different extents.

6. The device according to one of Claims 1 to 5, **characterized in that** in the case of more than two hinges (3, 4, 4') with a shared rotation axis (A), only one pin (6, 6', 6", 6‴) of one of the hinges (4, 4') is embodied to be longer than the pins (5) of the other hinges (3).

## Revendications

1. Dispositif de liaison d'un hayon élévateur (2) d'un véhicule utilitaire ou d'une remorque de véhicule automobile avec une section de butée (1) d'une surface de chargement du véhicule utilitaire ou de la remorque de véhicule automobile, sachant que le hayon élévateur (2) est articulé sur la section de butée (1) mobile en pivotement et de façon amovible par le biais d'au moins deux charnières (3, 4, 4'), sachant que les charnières (3, 4, 4') comportent un axe de rotation commun (A) et sont respectivement formées d'un pivot (5, 6, 6', 6", 6‴) et d'une douille (7, 8) emboîtable sur le pivot (5, 6, 6', 6", 6‴) **caractérisé en ce qu'**une charnière (4, 4') disposée le long de l'axe de rotation (A) comporte un pivot (6, 6', 6'', 6‴) plus long qu'une charnière suivante (3) et sachant que le pivot plus long (6, 6', 6", 6‴) comporte une section cylindrique (6a, 6a', 6a'', 6a‴) avec un diamètre constant en extension radiale par rapport à l'axe de rotation (A), sachant que la section cylindrique (6a, 6a', 6a", 6a‴) du pivot 6, 6', 6", 6‴) comporte une longueur correspondant au moins à la longueur de la douille (8).

2. Dispositif selon la revendication 1, **caractérisé en ce que** le pivot plus long (6, 6', 6'', 6''') s'amincit au moins par endroits à son extrémité libre.

3. Dispositif selon l'une quelconque des revendications 1 ou 2, **caractérisé en ce que** le pivot plus long (6, 6", 6‴) est constitué au moins par endroits de façon conique.

4. Dispositif selon l'une quelconque des revendications 1 à 3, **caractérisé en ce que** la section cylindrique (6a, 6a', 6a", 6a‴) comporte une longueur plus grande que la longueur de la douille (8).

5. Dispositif selon l'une quelconque des revendications 1 à 4, **caractérisé en ce que** la partie se réduisant du pivot plus long (6, 6') comporte des surfaces ou des zones (6d, 6d', 6c) coudées ou courbées d'épaisseur différente.

6. Dispositif selon l'une quelconque des revendications 1 à 5, **caractérisé en ce que** pour plus de deux charnières (3, 4, 4') avec un axe de rotation commun (A), seul un pivot (6, 6', 6", 6‴) d'une des charnières (4, 4') est réalisé plus long que les pivots (5) des autres charnières (3).
